# EUROPÄISCHE PATENTANMELDUNG

(11) **EP 1 388 769 A1**
(43) Veröffentlichungstag der Anmeldung: **11.02.2004**
(21) Anmeldenummer: 02017453.8
(22) Anmeldetag: 05.08.2002
(51) Int. Cl.: G05B 19/042

(54) **System zur Automatisierung, Überwachung, Steuerung, Messwerterfassung von technischen Prozessen**

(71) Anmelder: Renner, Peter, 51515 Kürten (DE)
(72) Erfinder: Renner, Peter, 51515 Kürten (DE)
(74) Vertreter: Nau, Walter, Dipl.-Ing.

(57) **Zusammenfassung**

Automatisierungs-, Überwachungs- und Messwerterfassungssystem bei technischen Prozessen mit Mess- und Steuereinheiten (2, 14, 15, 16), die mittels Mess- und Steuerleitungen (3, 11, 12, 13) mit Sensoren und Aktoren der Prozesse (1, 8, 9, 10) verbunden sind, mit einem in einem Datennetz (4) verteilten System, bei dem Automatisierungsmodule (44, 45, 46) zu Automatisierungseinheiten (39, 31, 32, 18, 19) und Automatisierungseinheiten zu Automatisierungsgruppen (99) zusammengefasst sind und einer übergeordneten Informationsebene (22), deren Informationsprogramme (23 bis27) lesenden Zugriff auf die Automatisierungseinheiten haben.

## Beschreibung

Die Erfindung bezieht sich auf ein Automatisierungssystem, das zur Überwachung, Steuerung oder zur Erfassung von Messdaten eines technischen Prozesses dient gemäß dem Oberbegriff des Patentanspruchs 1.

Es ist bekannt, zwischen den Prozessen und datenverarbeitenden Geräten (PCs) eine oder mehrere Mess- und Steuereinheiten vorzusehen. Diese sind über Mess-und Steuerleitungen mit Sensoren und Aktoren des Prozesses verbunden. Des Weiteren existiert eine Schnittstelle zu einem oder mehreren PCs, auf denen die beherrschende Software installiert ist. Die Mess- und Steuereinheiten können auch als Steckkarten konzipiert sein, die in den PCs integriert sind. Solche Mess- und Steuereinheiten können auch als Feldgeräte oder Einschübe konzipiert sein, die in Schaltschränken oder unmittelbar an Maschinen montiert sind.

Wenn als Schnittstelle ein Datennetz eingesetzt wird, so kann die beherrschende Software auf mehreren PCs installiert werden, wodurch leistungsfähige Systeme mit verteilter Intelligenz ermöglicht werden.

Herkömmliche Systeme bieten keine erkennbare Struktur. Jeder einzelne Automatisierungsmodul, sei es ein Automatisierungs-, Überwachungs-, oder Messwerterfassungsmodul ist eine Insellösung innerhalb eines Unternehmens und bietet keine Bindung zu komplexen abteilungs- oder unternehmensweiten Informationssystemen.

Der Erfindung liegt die Aufgabe zugrunde, diese Mängel zu beseitigen und die Voraussetzungen für ein abteilungs- oder firmenweites Informationssystem zu schaffen.

Dies wird durch die kennzeichnenden Merkmale des Patentanspruchs 1 ermöglicht.

Vorgesehen ist, dass in einem Datennetz, Automatisierungsmodule zu Automatisierungseinheiten zusammengefasst sind, wobei jeder Automatisierungsmodul über einen eigenen Programmcode verfügt und unabhängig von den anderen Automatisierungsmodulen lauffähig ist.

Kern ist der einzelne Automatisierungsmodul, dessen Aufgabe es ist, eine in sich geschlossene Automatisierungsaufgabe zu erledigen. Durch eine Automatisierungseinheit können z. B. eine Anzahl gleicher Prüfstände automatisiert werden, wobei jedem Prüfstand ein Automatisierungsmodul zugeordnet ist. In einer Automatisierungseinheit können auch in einem chemischen Labor alle Versuche gebündelt werden, die zur Optimierung eines Produktes erforderlich sind.

Dabei ist es wichtig, dass die verschiedenen Automatisierungsmodule einer Automatisierungseinheit unabhängig voneinander lauffähig sind. Es ist zweckmäßig, dass jeder Automatisierungsmodul über einen eigenen Programmcode verfügt.

In weiterer Ausbildung der Erfindung können Automatisierungseinheiten zu einer Automatisierungsgruppe zusammengefasst werden, wobei jede Automatisierungseinheit über einen eigenen Programmcode verfügt und unabhängig von den anderen Automatisierungseinheiten lauffähig ist. In solchen Automatisierungsgruppen können z.B. Versuche zur Optimierung vieler Produkte eines Unternehmens gebündelt werden. Solche Automatisierungsgruppen können auch Anlagenteile einer Gesamtanlage sein. Auch dabei ist es zweckmäßig, wenn jede Automatisierungsgruppe über einen eigenen gekapselten Programmcode verfügt.

In der Weiterbildung der Erfindung können eine praktisch beliebige Zahl von Automatisierungsgruppen vorgesehen werden, die prinzipiell unabhängig voneinander lauffähig sind.

In der weiteren Ausgestaltung der Erfindung ist eine Informationsschicht vorgesehen, die die Summe der Informationsprogramme darstellt, um die einzelnen Automatisierungseinheiten und Automatisierungsgruppen in einem größeren Zusammenhang zu erfassen.

Diese Programme haben einen lesenden Zugriff auf die einzelnen Automatisierungseinheiten. Die Informationsprogramme können unterschiedlich konfiguriert werden. Z.B. wird ein Abteilungsleiter nur lesenden Zugriff auf diejenigen Automatisierungsgruppen erhalten, die in seinem Verantwortungsbereich liegen. Einem Werkleiter dagegen werden alle Automatisierungsgruppen seines Werkes zugänglich sein.

In einer weiteren Ausbildung der Erfindung ist vorgesehen, die einzelnen Automatisierungseinheiten in drei Ebenen zu strukturieren. In eine oberste Ebene, Übersichtsebene genannt, in eine mittlere Ebene, Ebene der Automatisierungsmodule genannt, und eine untere Ebene, Reportebene genannt.

Aufgabe des Übersichtsprogramms der Übersichtsebene ist das Anlegen von neuen Automatisierungseinheiten und Automatisierungsmodulen und der Start und Stopp der Automatisierungsmodule in seiner Automatisierungseinheit. Ferner liefert das Übersichtsprogramm der Übersichtsebene Informationen über den Status der einzelnen Automatisierungsmodule. Unter Status werden Informationen, wie Automatisierungsmodul gestartet, gestoppt, ruhend oder unterbrochen verstanden.

Die Übersichtsprogramme der Übersichtsebenen sind für die Fachleute vorgesehen, die die Prozesse betreuen. Sie erhalten eine Übersicht über den Stand der einzelnen Prozesse. Auf dem Bildschirm des Übersichtsprogramm der Übersichtsebene sind symbolische Figuren vorgesehen, die Synonyme für die einzelnen Automatisierungsmodule darstellen. Die Markierungen der symbolischen Figuren zeigen an, ob die zugehörigen Automatisierungsmodule gerade laufen oder sich im Ruhezustand befinden. Durch unterschiedliche Farbgebung und Einblendung von Schriften können weitere Informationen über den Status der einzelnen Automatisierungsmodule angezeigt werden.

In der Ebene der Automatisierungsmodule können die verschiedenen Automatisierungsmodule entwickelt und unabhängig voneinander ausgeführt werden. Dies wird dadurch ermöglicht, dass jedes Automatisierungsmodul über einen eigenen Programmcode verfügt. In der Reportebene können eine beliebige Zahl von Reports entwickelt und unabhängig voneinander ausgeführt werden. Dies wird dadurch ermöglicht, dass jeder Report über einen eigenen Programmcode verfügt. Dem einzelnen Automatisierungsmodul kann ein Report zugeordnet werden. Der Report erhält Daten von dem korrespondierenden Automatisierungsmodul, die im Formular des Reports ausgegeben werden.

In weiterer Ausgestaltung der Erfindung wird vorgeschlagen, dass das Übersichtsprogramm mit Übersichtsebene über einen Entwicklungsmodus und einen Laufzeitmodus verfügt. Im Entwicklungsmodus können weitere Automatisierungsmodule angelegt werden. Wenn ein neues Automatisierungsmodul angelegt wird, so wird eine weitere symbolische Figur, die dem hinzugekommenen Automatisierungsmodul zugeordnet ist, auf der Oberfläche des Bildschirms angelegt. Dies führt dazu, dass ein weiterer kompletter Programmcode für diesen Automatisierungsmodul in der Automatisierungseinheit angelegt wird.

Weiterhin ist vorgesehen, dass jedes Automatisierungsmodul der Ebene der Automatisierungsmodule über einen Entwicklungsmodus und einen Laufzeitmodus verfügt. Im Entwicklungsmodus werden die einzelnen Automatisierungsmodule konfiguriert bzw. entwickelt. Der Laufzeitmodus dient zum normalen Betrieb der Automatisierungsmodule wie z.B. der automatisierte Ablauf eines Prozesses.

Weiterhin ist vorgesehen, dass jeder Report der Reportebene über einen Entwicklungsmodus und einen Laufzeitmodus verfügt. Im Entwicklungsmodus werden die Formulare der einzelnen Reports entwickelt. Dies geschieht dadurch, dass Felder angelegt werden. Diese Felder werden durch das korrespondierende Automatisierungsmodul zur Laufzeit mit Daten beschrieben.

In weiterer Ausbildung der Erfindung wird vorgeschlagen, dass die einzelnen Automatisierungsmodule in drei Ebenen strukturiert sind.

Die obere Ebene, modulare Bedien- und Beobachtungs-Ebene genannt, dient als Schnittstelle zum Benutzer. Die Schaubilder enthalten Prozessvisualisierungsobjekte. Diese Prozessvisualisierungsobjekte können im Entwicklungsmodus installiert und mit Eigenschaften versehen werden. Solche Prozessvisualisierungsobjekte sind virtuelle Tasten, Schalter, Anzeigegeräte und vieles mehr. Mit Hilfe dieser Objekte kann der Benutzer zur Laufzeit den Prozess bedienen und beobachten.

Die mittlere Ebene, Prozedurebene genannt, enthält die Prozedur-Bildschirme des Automatisierungsmoduls. Die Prozedur-Bildschirme enthalten graphische Symbole, Prozeduren genannt, als Synonyme für Programmmodule des Automatisierungsmoduls. Im Entwicklungsmodus werden die Prozeduren angelegt, die den Programmcode enthalten. Im Laufzeitmodus sind erfindungsgemäß im Prozedur-Bildschirm diejenigen Prozeduren markiert, die gerade in Funktion sind.

Die untere Ebene, Scriptebene genannt, enthält den Programmcode im Scriptfenster. Ein Anwender kann im Scriptfenster das Automatisierungsprogramm zur Steuerung des zugrunde liegenden technischen Prozesses entwickeln. Die Entwicklung des Programmcodes erfolgt prozedurbezogen. Um in das Scriptfenster zu gelangen, muss auf die korrespondierende symbolische Figur der Prozedur geklickt werden. Nun kann der Programmcode der Prozedur im Scriptfenster entwickelt werden.

Ein weiteres Erfindungsmerkmal ist eine Kanaltabelle, die als Umschlagplatz für Prozessdaten dient. Unter Prozessdaten werden analoge und digitale Signale verstanden. Einerseits werden solche Signale laufend von den Prozessen über die Mess- und Steuereinheit der Schnittstelle in die Kanaltabelle geschrieben und stehen nun den Automatisierungsmodulen zur Verfügung. Andererseits produzieren die Automatisierungsmodule Steuersignale, die in die Kanaltabelle geschrieben und an die Prozesse weitergeleitet werden, um dort gewünschte Veränderungen zu verursachen.

In einer weiteren Ausbildung der Erfindung ist vorgesehen, dass den analogen Prozessgrößen wie z.B. Temperaturen, Drücke, Durchflüsse, die mittels Sensoren durch die Mess- und Steuereinheit erfasst werden, ein Zeitstempel hinzugefügt werden kann, so dass zu einem späteren Zeitpunkt das zeitliche Auftreten des Messsignals bestimmt werden kann.

In der gleichen Weise kann mit digitalen Signalen verfahren werden, z.B. wenn eine Maschine ein- oder ausgeschaltet wird. In diesem Falle wird genau dieser Zeitpunkt, der auch als Flankenwechsel bezeichnet wird, mit einem Zeitstempel versehen. Der Zeitstempel kann unterschiedlich gestaltet werden. Er kann Datum und Uhrzeit, nur die Uhrzeit oder eine relative Zeit enthalten.

In weiterer Ausbildung der Erfindung ist eine Formulartabelle vorgesehen. Diese dient als Datenschnittstelle zwischen dem Script eines Automatisierungsmoduls und seinem zugehörigen Report. Im Entwicklungsmodus des Reports wird der Report als Formular entwickelt. Es werden Formularfelder im Report festgelegt, in die während der Laufzeit Daten geschrieben werden. Erfindungsgemäß strukturiert der Report gleichzeitig die Formulartabelle, wobei analog zu den Formularfeldern Felder in der Formulartabelle angelegt werden. Zur Laufzeit dienen die Felder der Formulartabelle als Datenschnittstelle zwischen dem Script des Automatisierungsmoduls und seinem korrespondierenden Report.

Zur weiteren Erläuterung der Erfindung wird auf die Abbildungen verwiesen, in denen Ausführungsbeispiele vereinfacht dargestellt sind.

Es zeigen:
- **Abbildung 1**: den Aufbau eines gesamten Systems mit einem zu automatisierenden Prozess, der Mess- und Steuereinheit und den PCs, auf denen die Software installiert ist,
- **Abbildung 2**: den Aufbau des Gesamtsystems als Blockschaltbild mit drei Prozessen, drei Mess- und Steuereinheiten, einer Informationsschicht mit Informationsprogrammen und einer Automatisierungsgruppe mit drei Automatisierungseinheiten,
- **Abbildung 3**: ein Blockschaltbild als Teilaspekt des Gesamtsystems mit zwei Mess- und Steuereinheiten, zwei Automatisierungseinheiten, in denen die drei Schichten der einzelnen Automatisierungseinheiten dargestellt sind,
- **Abbildung 4**: das Blockschaltbild einer Automatisierungseinheit, in dem die drei Ebenen dargestellt sind, wobei in der Prozedurebene und in der Reportebene je drei Automatisierungsmodule und drei Reports dargestellt sind,
- **Abbildung 5**: das Blockschaltbild einer Automatisierungseinheit und einer Mess- und Steuereinheit und den Datenaustausch zwischen der Mess- und Steuereinheit via Kanaltabelle und zwei Automatisierungsmodulen,
- **Abbildung 6**: das Blockschaltbild einer Automatisierungseinheit mit seinen drei Ebenen, wobei in den Ebenen als Blöcke das Übersichtsprogramm, drei Automatisierungsmodulen und drei Reports dargestellt und alle Blöcke zweigeteilt sind, die den Entwicklungsmodus und den Laufzeitmodus darstellen,
- **Abbildung 7**: den Bildschirm des Übersichtsprogramms der Übersichtsebene einer Automatisierungseinheit im Entwicklungsmodus,
- **Abbildung 8**: den Bildschirm des Übersichtsprogramms der Übersichtsebene einer Automatisierungseinheit im Laufzeitmodus,
- **Abbildung 9**: die Bildschirme eines Automatisierungsmoduls und
- **Abbildung 10**: das Blockschaltbild einer Formulartabelle als Bindeglied zwischen dem Automatisierungsmodul und dem Report.

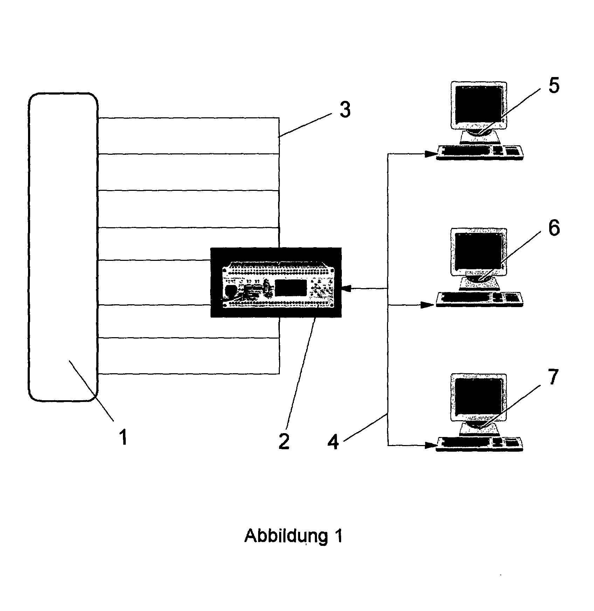

In **Abbildung 1** sind bezeichnet mit 1 ein zu automatisierender Prozess, mit 2 eine Mess- und Steuereinheit, mit 3 Leitungen zwischen den Sensoren und Aktoren des Prozesses und der Mess- und Steuereinheit, mit 4 ein Datennetz als Datenverbindung zwischen der Mess- und Steuereinheit und den PCs und mit 5, 6, und 7 die PCs, auf denen die Mess- und Steuersoftware installiert ist.

### Die Funktion entsprechend Abbildung 1 ist folgende:

Die Mess- und Steuereinheit 2 dient als Interface zwischen dem Prozess1, den es zu überwachen oder zu automatisieren gilt. In dem Prozess 1 sind Sensoren und Aktoren vorgesehen, die über die Verbindungsleitungen 3 mit der Mess- und Steuereinheit 2 verbunden sind. Die Mess- und Steuereinheit 2 ist wiederum über das Datennetzwerk 4 mit den PCs 5, 6, 7 verbunden. Somit können analoge und digitale Signale der Sensoren zu den PCs 6, 7, 8 geleitet werden. Die Software der PCs 6, 7, 8 produzieren Steuerbefehle, die auf dem gleichen Weg den Aktoren des Prozesses 1 zugeleitet werden.

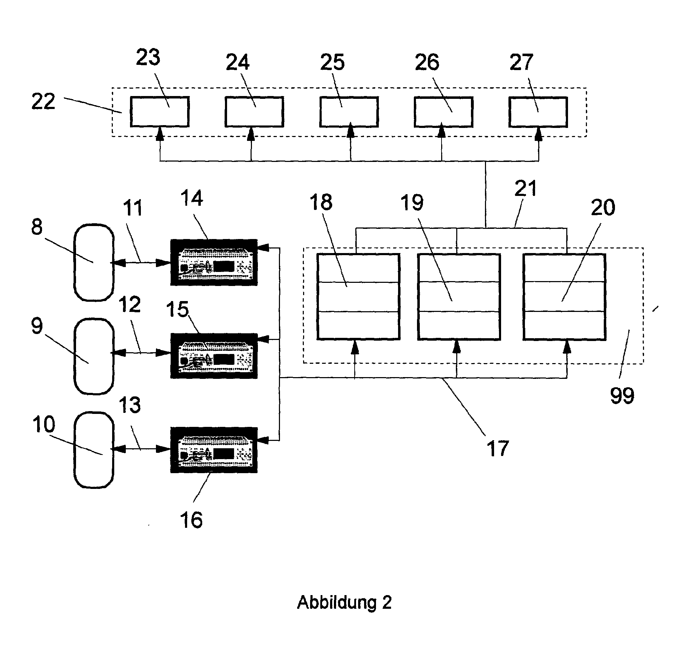

In **Abbildung 2** sind bezeichnet mit 8, 9, 10 zu automatisierende Prozesse, mit 11, 12, 13 Leitungen zwischen den Sensoren und Aktoren der Prozesse und den Klemmen der Mess- und Steuereinheiten, mit 14, 15, 16 Mess-und Steuereinheiten, mit 17 ein Datennetz als Datenverbindung zwischen der Mess- und Steuereinheit und den PCs, mit 18, 19, 20 Automatisierungseinheiten, die in drei Ebenen strukturiert sind und die Automatisierungsmodule enthalten, mit 21 ein Datennetz als Datenverbindung zwischen den Automatisierungseinheiten und den Informationsprogrammen, mit 22 eine Informationsschicht, die die Informationsprogramme enthält, mit 23, 24, 25, 26, 27 Informationsprogramme der Informationsschicht und mit 99 eine Automatisierungsgruppe, die die Automatisierungseinheiten beinhaltet.

### Die Funktion entsprechend Abbildung 2 ist folgende:

Die Mess- und Steuereinheiten 14, 15, 16 dienen als Interface zwischen den Prozessen 8, 9, 10, die es zu überwachen oder zu automatisieren gilt. In den Prozessen 8, 9, 10 sind Sensoren und Aktoren vorgesehen, die über die Verbindungsleitungen 11, 12, 13 mit den Mess- und Steuereinheiten 14, 15, 16 verbunden sind. Die Mess- und Steuereinheiten 14, 15, 16 sind wiederum über das Datennetzwerk 17 mit den PCs verbunden, in denen die Automatisierungseinheiten 18, 19, 20 installiert sind. Somit können analoge und digitale Signale der Sensoren zu den Automatisierungsmodulen in den Automatisierungseinheiten 18, 19, 20 geleitet werden. Die Automatisierungsmodule in den Automatisierungseinheiten 18, 19, 20 produzieren Steuerbefehle, die auf dem gleichen Weg den Aktoren der Prozesse 8, 9, 10 zugeleitet werden. Dies sorgt dafür, dass die Prozesse 8, 9, 10 in der gewünschten Weise gesteuert werden. Die PCs, auf denen die Automatisierungseinheiten 18, 19, 20 installiert sind, sind über ein Datennetzwerk 21 mit den verschiedenen PCs verbunden, auf denen die Informationsprogramme 23, 24, 25, 26, 27 laufen. Die Informationsprogramme 23 bis 27 können der Information übergeordneter organisatorischer Schichten dienen. Alle interessierten Stellen, wenn sie autorisiert sind, können nun lesend auf die Automatisierungseinheiten 18, 19, 20 zugreifen und sich bis herunter auf die Ebene der Automatisierungsmodule 34, 37 und Reportebene 35, 38 über den Stand informieren.

Die einzelnen Informationsprogramme 23 bis 27 können unterschiedlich konfiguriert werden, so dass nur in die Automatisierungseinheiten 18, 19, 20 eingesehen werden kann, die für die entsprechende Stelle relevant sind. Somit wird z.B. ein Abteilungsleiter nur die Automatisierungseinheiten einsehen können, die in seinen Verantwortungsbereich fallen. Höhere Managementschichten werden möglicherweise in eine größere Zahl von Automatisierungseinheiten einsehen dürfen. Die Informationsprogramme 23 bis 27 sind in einer Informationsschicht 22 zusammengefasst. Die Automatisierungseinheiten 18, 19, 20 sind in einer Automatisierungsgruppe 99 zusammengefasst.

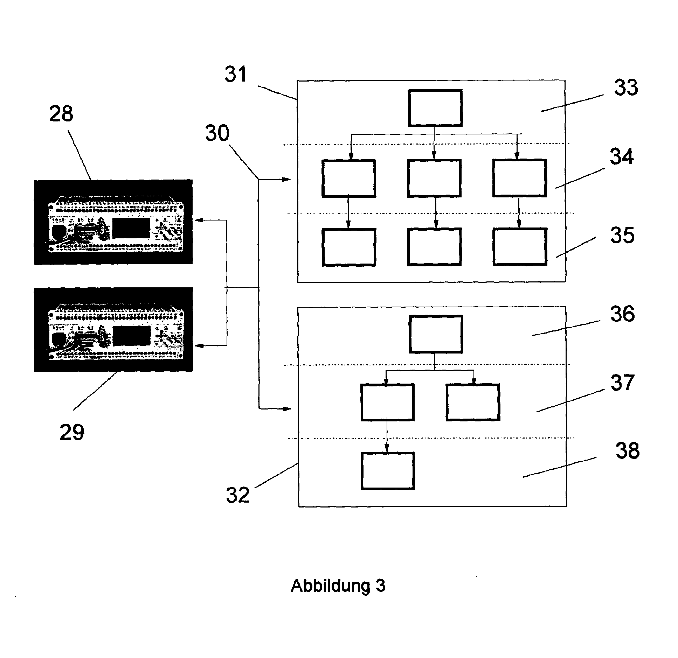

In **Abbildung 3** sind bezeichnet mit 28, 29 Mess- und Steuereinheiten, mit 30 ein Datennetzwerk, mit 31, 32 Automatisierungseinheiten, mit 33 eine Übersichtsebene in einer Automatisierungseinheit, mit 34 eine Ebene der Automatisierungsmodule in einer Automatisierungseinheit, mit 35 eine Reportebene in einer Automatisierungseinheit, mit 36 eine Übersichtsebene in einer weiteren Automatisierungseinheit, mit 37 eine Ebene der Automatisierungsmodule in einer weiteren Automatisierungseinheit und mit 38 eine Reportebene in einer weiteren Automatisierungseinheit.

### Die Funktion entsprechend Abbildung 3 ist folgende:

Die Mess- und Steuereinheiten 28, 29 sind über das Datennetzwerk 30 mit den PCs verbunden, in denen die Automatisierungseinheiten 31, 32 installiert sind. Somit können analoge und digitale Signale der Sensoren von Prozessen zu den Automatisierungsmodulen in den Automatisierungseinheiten 31, 32 geleitet werden. Die Automatisierungsmodule der Ebenen der Automatisierungsmodule 34, 37 in den Automatisierungseinheiten 31, 32 produzieren Steuerbefehle, die auf dem gleichen Weg den Aktoren der Prozesse zugeleitet werden. Dies sorgt dafür, dass die Prozesse in der gewünschten Weise gesteuert werden können.

Die Automatisierungseinheiten 31, 32 sind in einzelne Ebenen unterteilt, wobei jede Ebene spezifische Aufgaben erledigt. Die obere Ebene, Übersichtsebene 33, 36 genannt, hat die Aufgabe, dem Benutzer eine Übersicht der Automatisierungsmodule, die in der Ebene der Automatisierungsmodule 34, 37 positioniert sind, zu ermöglichen. Eine Aufgabe der Übersichtsebene 33, 36 ist das Anlegen von neuen Automatisierungseinheiten 31, 32 und Automatisierungsmodulen der Ebene der Automatisierungsmodule 34, 37 und der Start und Stop der Automatisierungsmodule in diesem Automatisierungseinheiten. Ferner liefert die Übersichtsebene 33, 36 Informationen über den Status der einzelnen Automatisierungsmodule. Unter Status werden solche Informationen, wie Automatisierungsmodul gestartet, gestoppt, ruhend, unterbrochen, verstanden.

In der mittleren Ebene, Ebene der Automatisierungsmodule 34, 37 genannt, sind die verschiedenen Automatisierungsmodule positioniert. Automatisierungsmodule können Automatisierungs-, Überwachungs- oder Messwerterfassungs-Aufgaben erledigen. Die verschiedenen Automatisierungsmodule können in der Ebene der Automatisierungsmodule 34, 37 entwickelt und unabhängig voneinander ausgeführt werden. Dies wird dadurch ermöglicht, dass jeder Automatisierungsmodul über einen eigenen, gekapselten Programmcode verfügt.

In der unteren Ebene, Reportebene 35, 38 genannt, sind die Reports positioniert. Es kann eine beliebige Zahl von Reports entwickelt und unabhängig voneinander ausgeführt werden. Dies wird dadurch ermöglicht, dass jeder Report über einen eigenen Programmcode verfügt. Den einzelnen Automatisierungsmodulen kann ein Report zugeordnet werden. Der Report erhält Daten von dem korrespondierenden Automatisierungsmodul, die im Formular des Reports ausgegeben werden können.

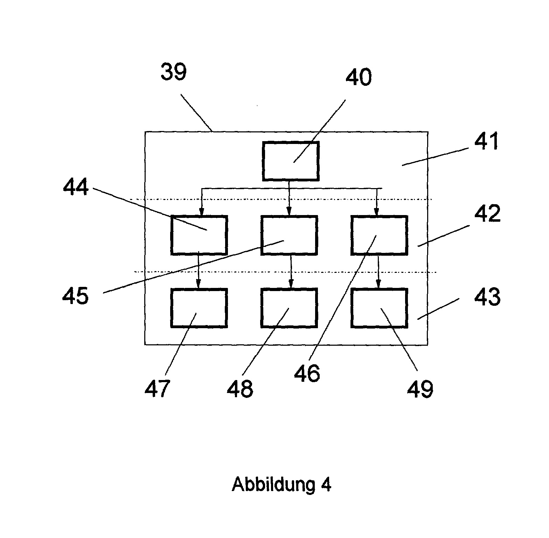

In **Abbildung 4** sind bezeichnet mit 39 eine. Automatisierungseinheit, mit 40 ein Übersichtsprogramm, mit 41 eine Übersichtsebene, mit 42 eine Ebene der Automatisierungsmodule, mit 43 eine Reportebene, mit 44, 45, 46 Automatisierungsmodule und mit 47, 48, 49 Reports.

### Die Funktion entsprechend Abbildung 4 ist folgende:

Die Automatisierungseinheit 39 ist in einzelne Ebenen unterteilt, wobei jede Ebene spezifische Aufgaben erledigt.
Das Übersichtsprogramm 40 der Übersichtsebene 41 hat die Aufgabe, dem Benutzer eine generelle Sicht der Automatisierungsmodule 44, 45, 46, die in der Ebene der Automatisierungsmodule 42 positioniert sind, zu ermöglichen. Eine Aufgabe des Übersichtsprogramms 40 ist das Anlegen von neuen Automatisierungseinheiten 39 und Automatisierungsmodulen 44, 45, 46 und der Start und Stop der Automatisierungsmodule 44, 45, 46 in der Automatisierungseinheit 39. Ferner liefert das Übersichtsprogramm 40 Informationen über den Status der einzelnen Automatisierungsmodule 44, 45, 46. Unter Status werden solche Informationen, wie Automatisierungsmodul 44, 45, 46 gestartet, gestoppt, ruhend, unterbrochen, verstanden.

In der Ebene der Automatisierungsmodule 42 sind die verschiedenen Automatisierungsmodule 44, 45, 46 positioniert. Automatisierungsmodule 44, 45, 46 können Automatisierungs-, Überwachungs- oder Messwerterfassungs-Aufgaben erledigen. Die verschiedenen Automatisierungsmodule 44, 45, 46 können in der Ebene der Automatisierungsmodule 42 entwickelt und unabhängig voneinander ausgeführt werden. Dies wird dadurch ermöglicht, dass jeder Automatisierungsmodul 44, 45, 46 über einen eigenen Programmcode verfügt.

In der Reportebene 43, sind Reports 47, 48, 49 positioniert. Es können eine beliebige Zahl von Reports 47, 48, 49 entwickelt und unabhängig voneinander ausgeführt werden. Dies wird dadurch ermöglicht, dass jeder Report 47, 48, 49 über einen eigenen Programmcode verfügt. Dem einzelnen Automatisierungsmodul 44, 45, 46 kann ein Report 47, 48, 49 zugeordnet werden. Die Reports 47, 48, 49 erhalten Daten von der korrespondierenden Automatisierungsmodulen 44, 45, 46, die im Formular des Reports 47, 48, 49 ausgegeben werden können.

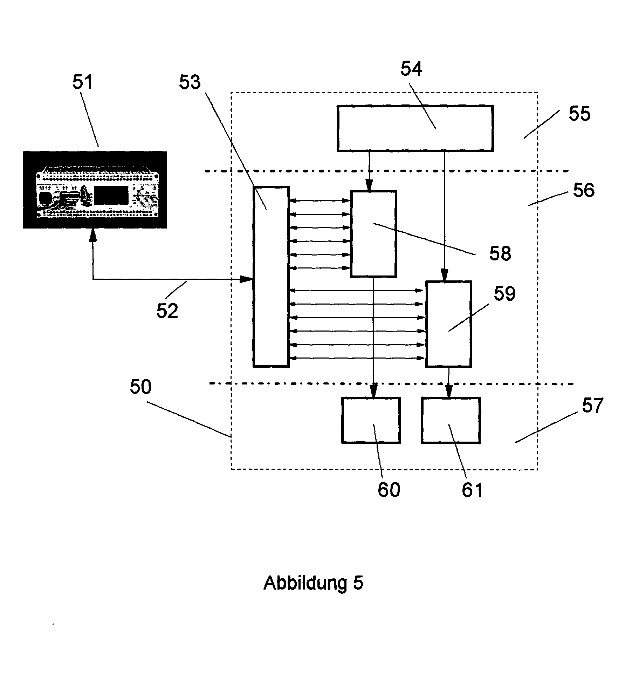

In **Abbildung 5** sind bezeichnet mit 50 eine Automatisierungseinheit, mit 51 eine Mess- und Steuereinheit, mit 52 ein Datennetzwerk, mit 53 eine Kanaltabelle, mit 54 ein Übersichtsprogramm, mit 55 eine Übersichtsebene der Automatisierungseinheit, mit 56 eine Ebene der Automatisierungsmodule in der Automatisierungseinheit, mit 57 eine Reportebene in der Automatisierungseinheit, mit 58, 59 Automatisierungsmodule in der Automatisierungseinheit und mit 60, 61 Reports in der Automatisierungseinheit.

### Die Funktion entsprechend Abbildung 5 ist folgende:

Die Mess- und Steuereinheit 51 ist über das Datennetzwerk 52 mit dem PC verbunden, in dem die Automatisierungseinheit 50 installiert ist.

Die Kanaltabelle 53 dient als Umschlagplatz für Prozessdaten. Somit können analoge und digitale Signale der Sensoren von Prozessen zu den Automatisierungsmodulen 58, 59 unter Vermittlung der Kanaltabelle 53 geleitet werden. Die Automatisierungsmodule 58, 59 in der Automatisierungseinheit 50 produzieren Steuerbefehle, die auf dem gleichen Weg in entgegengesetzter Richtung den Aktoren der Prozesse zugeleitet werden. Dies sorgt dafür, dass die Prozesse in der gewünschten Weise gesteuert werden.

Unter analogen Signalen werden Prozessgrößen wie Temperaturen, Drücke, Durchflüsse, Geschwindigkeiten, Drehzahlen und ähnliches verstanden. Digitale Signale können Zustände von Maschinen und Anlagen sein. Prozessgrößen werden in den Feldern der Kanaltabelle 53 häufig mit einem Zeitstempel gespeichert, so dass zu einem späteren Zeitpunkt das zeitliche Auftreten solcher Signale nachvollzogen werden kann.

Die Automatisierungseinheit 50 ist in einzelne Ebenen 55, 56, 57 unterteilt, wobei jede Ebene spezifische Aufgaben erledigt.

Das Übersichtsprogramm 54 der Übersichtsebene 55, hat die Aufgabe dem Benutzer eine generelle Sicht der Automatisierungsmodule 58, 59 zu geben, die in der Ebene der Automatisierungsmodule 56 positioniert sind. Eine Aufgabe des Übersichtsprogrammes 54 der Übersichtsebene 55 ist das Anlegen von weiteren Automatisierungseinheiten 50 und Automatisierungsmodulen 58, 59 und der Start und Stop der Automatisierungsmodule 58, 59 in der Automatisierungseinheit 50. Ferner liefert das Übersichtsprogramm 54 Informationen über den Status der einzelnen Automatisierungsmodule 58, 59. Unter Status werden solche Informationen, wie Automatisierungsmodule 58, 59 gestartet, gestoppt, ruhend, unterbrochen, verstanden.

In der Reportebene 57, sind die Reports 60, 61 positioniert. Es können eine beliebige Zahl von Reports 60, 61 entwickelt und unabhängig voneinander ausgeführt werden. Dies wird dadurch ermöglicht, dass jeder Report 60, 61 über einen eigenen Programmcode verfügt. Den einzelnen Automatisierungsmodulen 58, 59 kann je ein Report 60, 61 zugeordnet werden. Die Reports 60, 61 erhalten Daten von den korrespondierenden Automatisierungsmodulen 58, 59, die im Formular der Reports 60, 61 ausgegeben werden.

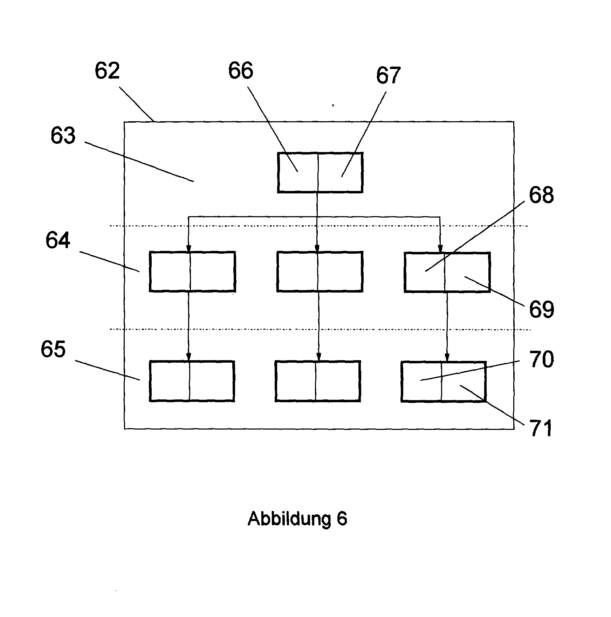

In **Abbildung 6** sind bezeichnet mit 62 eine Automatisierungseinheit, mit 63 eine Übersichtsebene, mit 64 eine Ebene der Automatisierungsmodule, mit 65 eine Reportebene, mit 66, 67 ein Übersichtsprogramm, mit 68, 69 ein Automatisierungsmodul und mit 70, 71 ein Report.

### Die Funktion des Blockschaltbildes entsprechend Abbildung 6 ist folgende:

Die Automatisierungseinheit 62 ist in einzelne Ebenen 63, 64, 65 unterteilt, wobei jede Ebene 63, 64, 65 spezifische Aufgaben erledigt.

Die Übersichtsebene 63 enthält das Übersichtsprogramm, das aus den Teilen 66, 67 besteht.

Im Teil 66 des Übersichtsprogramm, dies ist der Entwicklungsmodus, können weitere Automatisierungseinheiten 62 und weitere Automatisierungsmodule innerhalb der Automatisierungseinheit angelegt werden.

Im Teil 67 des Übersichtsprogramm, dies ist der Laufzeitmodus, können Automatisierungsmodule der Ebene der Automatisierungsmodule 64 gestartet und gestoppt werden. Zu dem gibt der Teil 67 des Übersichtsprogramm Informationen über den Status der einzelnen Automatisierungsmodule der Ebene der Automatisierungsmodule 64 aus. Unter Status werden solche Informationen, wie Automatisierungsmodul gestartet, gestoppt, ruhend, unterbrochen, verstanden.

Die Ebene der Automatisierungsmodule 64 enthält die Automatisierungsmodule, die aus den Teilen 68, 69 bestehen. Die Automatisierungsmodule mit den Teilen 68, 69 können Automatisierungs-, Überwachungs-oder Messwerterfassungs-Aufgaben erledigen.

Im Teil 68 der Automatisierungsmodule, dies ist der Entwicklungsmodus, kann der Automatisierungsmodul entwickelt werden. Im Teil 69 des Automatisierungsmoduls, dies ist der Laufzeitmodus, kann der Automatisierungsmodul unabhängig von den anderen Automatisierungsmodulen ausgeführt werden.

Die Reportebene 66 enthält Reports, die aus den Teilen 70, 71 bestehen. Im Teil 70 des Reports, dies ist der Entwicklungsmodus, kann der Report entwickelt werden. Im Teil 71 des Reports, dies ist der Laufzeitmodus, kann der Report unabhängig von den anderen Reports ausgeführt werden. Ein Report ist mit einem korrespondierenden Automatisierungsmodul fest verknüpft. Mit dem Start eines Automatisierungsmoduls wird auch der korrespondierende Report gestartet.

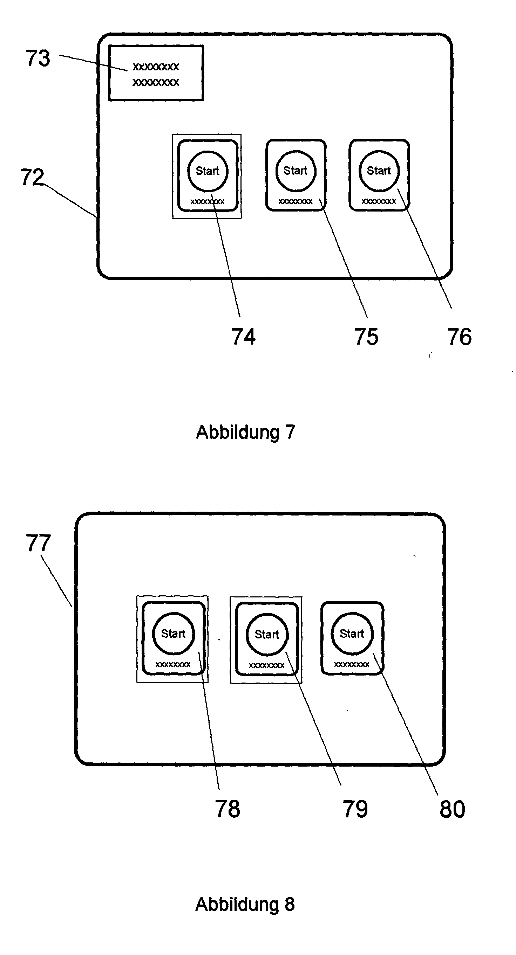

In **Abbildung 7** sind bezeichnet mit 72 der Bildschirm des Entwicklungsmodus eines Übersichtsprogramms, mit 73 eine Liste der angelegten Automatisierungsmodule und mit 74, 75, 76 Sinnbilder von Automatisierungsmodulen.

### Die Funktion des Bildschirms entsprechend Abbildung 7 ist folgende:

Der Bildschirm 72 zeigt den Entwicklungsmodus des Übersichtsprogramms einer Automatisierungseinheit.

Auf dem Bildschirm 72 befinden sich symbolische Figuren 74, 75 , 76 die Synonyme für die installierten Automatisierungsmodule darstellen. Der Bildschirm 72 dient dazu, weitere Automatisierungsmodule anzulegen oder zu entfernen. Zum Anlegen von Automatisierungsmodulen ist die Liste der Automatisierungsmodule 73 vorgesehen. Auf einfache Weise wird ein Automatisierungsmodul aus der Liste der Automatisierungsmodule 73 auf die freie Fläche des Bildschirms gezogen. Dann öffnet sich eine weitere symbolische Figur wie die Figuren 74, 75, 76 des neuen Automatisierungsmoduls. Nach Vergabe eines individuellen Namens für den neuen Automatisierungsmodul, ist dieser Automatisierungsmodul fest installiert. Wenn an einem Automatisierungsmodul gerade, im Sinne der Programmentwicklung gearbeitet wird, so ist das Sinnbild 74 des Automatisierungsmoduls 74 markiert.

In **Abbildung 8** sind bezeichnet mit 77 der Bildschirm des Laufzeitmodus eines Übersichtsprogramm und mit 78, 79, 80 Sinnbilder von Automatisierungsmodulen.

### Die Funktion des Bildschirms entsprechend Abbildung 8 ist folgende:

Der Bildschirm 77 zeigt den Laufzeitmodus des Übersichtsprogramms einer Automatisierungseinheit. Auf dem Bildschirm 77 sind symbolische Figuren 78, 79, 80 vorgesehen, die Synonyme für einzelne Automatisierungsmodule darstellen. Der Bildschirm 77 ermöglicht es, während der Laufzeit den Status der einzelnen Automatisierungsmodule zu beobachten.

Die symbolischen Figuren 78, 79 sind markiert. Sie zeigen an, dass die zugehörigen Automatisierungsmodule gerade ausgeführt werden. Dagegen befindet sich der Automatisierungsmodul 80 (nicht markiert) im Ruhezustand.

Durch unterschiedliche Farbgebung der symbolischen Figuren 78, 79, 80 und/oder Einblendung von Schriften können weitere Informationen über den Status der einzelnen Automatisierungsmodule angezeigt werden.

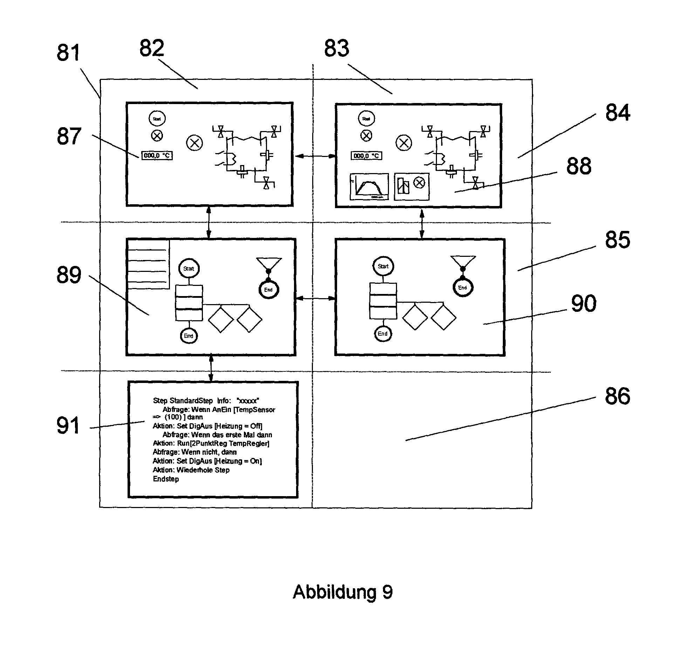

In **Abbildung 9** sind bezeichnet mit 81 die Bildschirme eines Automatisierungsmoduls, mit 82 die Bildschirme eines Entwicklungsmodus (senkrecht untereinander), mit 83 die Bildschirme eines Laufzeitmodus (senkrecht untereinander), mit 84 eine modulare Bedien- und Beobachtungs-Ebene (waagrecht nebeneinander), mit 85 eine Prozedurebene (waagrecht nebeneinander), mit 86 eine Scriptebene, die Ebene der Automatisierungssprache (nur Entwicklungsmodus), mit 87 der Bildschirm des Entwicklungsmodus der Bedien- und Beobachtungs-Ebene, mit 88 der Bildschirm des Laufzeitmodus der Bedien- und Beobachtungs-Ebene, mit 89 der Prozedur-Bildschirm des Entwicklungsmodus der Prozedurebene, mit 90 der Prozedur-Bildschirm des Laufzeitmodus der Prozedurebene und mit 91 der Script-Bildschirm der Automatisierungssprache im Entwicklungsmodus.

### Die Funktion der Bildschirme entsprechend Abbildung 9 ist folgende:

Der Automatisierungsmodul 81 ist der Kern des gesamten Systems. Er stellt eine Anzahl von unterschiedlichen Bildschirmen zur Verfügung, die Benutzern die Entwicklung von Automatisierungslösungen im Entwicklungsmodus 82 ermöglichen und die es ihm im Laufzeitmodus 83 erlauben, Prozesse zu bedienen und zu beobachten.

Die obere Ebene, modulare Bedien- und Beobachtungs-Ebene 84 genannt, beinhaltet den Bildschirm 87, der der Entwicklung der Bedien- und Beobachtungs-Ebene dient.

Die obere Ebene, modulare Bedien- und Beobachtungs-Ebene 84, beinhaltet weiterhin den Bildschirm 88, der als Schnittstelle zum Benutzer während der Laufzeit dient.

Die Bildschirme 87, 88 enthalten Prozessvisualisierungsobjekte. Diese Prozessvisualisierungsobjekte können im Entwicklungsmodus 82 installiert und mit Eigenschaften versehen werden. Solche Prozessvisualisierungsobjekte sind virtuelle Tasten, Schalter, Sollwertsteller, Anzeigegeräte, Trends, Kennliniendarstellungen, Balkenanzeigen und vieles mehr. Mit Hilfe dieser Objekte kann der Benutzer zur Laufzeit 83 die Prozesse bedienen und beobachten.

Die mittlere Ebene, Prozedurebene 85 genannt, enthält die Prozedur-Bildschirme 89, 90. Die Prozedur-Bildschirme 89, 90 enthalten graphische Symbole als Synonyme für Programmmodule 91. Im Entwicklungsmodus 82 werden die Module angelegt, die als Behälter für Programmcode angesehen werden können. Ferner werden sie nach festen Regeln mit Verbindungslinien horizontal und vertikal verbunden. Diese Verbindungslinien zeigen an, in welchem inneren Zusammenhang die einzelnen Module miteinander stehen. Im Laufzeitmodus 83 sind in dem Prozedur-Bildschirm 90 diejenigen Module markiert, die gerade in Funktion sind. Somit kann sich ein Benutzer über den Prozessablauf informieren. Somit hat ein Benutzer mit den Bildschirmen 88 und dem Modulbildschirm 90 im Laufzeitmodus 83 eine permanente Kontrolle über den Prozessablauf.

Die untere Ebene, Scriptebene 86 genannt, enthält den Programmcode im Scriptfensters 91. Ein Anwender kann im Scriptfenster 91 das Automatisierungsprogramm zur Steuerung des zugrundeliegenden technischen Prozesses entwickeln.

Die Entwicklung des Programmcodes erfolgt prozedurbezogen. Wenn im Modulbildschirm 89 auf eine der symbolischen Figuren geklickt wird, so öffnet sich das Scriptfenster mit dem Programmcode der angeklickten Prozedur nun kann der Programmcode im Scriptfenster 91 entwickelt werden.

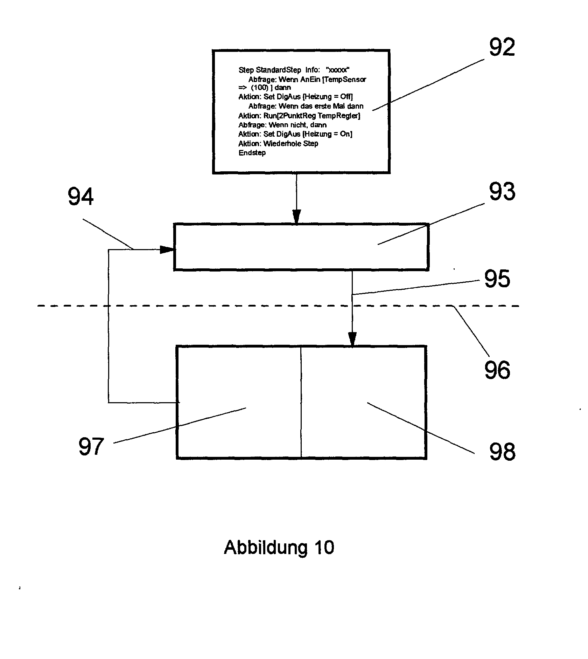

In **Abbildung 10** sind bezeichnet mit 92 der Programmcode eines Automatisierungsmoduls, mit 93 eine Formulartabelle, mit 94 der Datenpfad zur Konfiguration der Formulartabelle, mit 95 der Datenpfad für Daten, die im Report ausgegeben werden sollen, mit 96 die Trennung zwischen dem Automatisierungsmodul (oben) und dem Report (unten), mit 97 der Entwicklungsmodus des Reports und mit 98 der Laufzeitmodus des Reports.

### Die Funktion entsprechend Abbildung 10 ist folgende:

Eine Formulartabelle 93 dient als Datenschnittstelle zwischen einem Automatisierungsmodul und seinem korrespondierenden Report 97, 98. Ein Report besteht aus den beiden Teilen Entwicklungsmodus 97 und dem Laufzeitmodus 98.

Durch den Programmcode 92 eines Automatisierungsmoduls werden zur Laufzeit Daten in die einzelnen Felder der Formulartabelle 93 geschrieben. Der Report entnimmt die Daten aus der Formulartabelle 93 und schreibt sie in die korrespondierenden Felder des Formulars (Report). Ein solches Formular kann auf einen Drucker ausgedruckt werden.

Zu Beginn einer Entwicklungsphase sind die Felder des Formulars und die Daten, die in die einzelnen Felder geschrieben werden sollen, unbekannt. Aus diesem Grunde muss zuerst das Formular des Reports entwickelt werden. Im Entwicklungsmodus 97 des Reports wird der Report als Formular entwickelt. Es werden dadurch Formularfelder im Report angelegt, in die während der Laufzeit die Daten geschrieben werden sollen.

Erfindungsgemäß strukturiert der Report automatisch die Formulartabelle 93. Wenn ein neues Feld im Formular des Reports angelegt wird, so wird automatisch ein korrespondierendes Feld in der Formulartabelle angelegt. Dadurch korrelieren die Felder des Reports mit den Feldern der Formulartabelle 93. Die Formulartabelle 93 ist Bestandteil des Automatisierungsmoduls. Die Strukturierung der Formulartabelle 93 erfolgt über den Pfad 94.

Der Programmentwickler kennt nun die Felder der Formulartabelle 93, da sie Bestandteil des Automatisierungsmoduls sind. Er kann nun den Programmcode 92 so schreiben, dass zur Laufzeit die Daten, die im Report erscheinen sollen, in die richtigen Felder der Formulartabelle 93 geschrieben werden. Diese Daten werden dann zur Laufzeit über den Datenpfad 95 dem Laufzeitmodus 98 des Reports zugeführt und können somit korrekt im Report 98 ausgegeben werden.

## Patentansprüche

1. Automatisierungs-, Überwachungs- und Messwerterfassungssystem bei technischen Prozessen mit Mess- und Steuereinheiten (2, 14, 15, 16), die mittels Mess- und Steuerleitungen (3, 11, 12, 13) mit Sensoren und Aktoren der Prozesse (1, 8, 9, 10) verbunden sind,
**gekennzeichnet durch** in einem Datennetz (4) verteiltes System, bei dem Automatisierungsmodule (44, 45, 46) zu Automatisierungseinheiten (39, 31, 32, 18, 19) zusammengefasst sind, wobei jedes Automatisierungsmodul über einen eigenen Programmcode verfügt und unabhängig von den anderen Automatisierungsmodulen lauffähig ist.

2. Automatisierungs-, Überwachungs- und Messwerterfassungssystem bei technischen Prozessen nach Anspruch 1,
**gekennzeichnet durch** in einem Datennetz (4) verteiltes System, bei dem Automatisierungseinheiten (18, 19, 20) zu einer Automatisierungsgruppe (99) zusammengefasst sind, wobei jede Automatisierungseinheit über einen eigenen Programmcode verfügt und unabhängig von den anderen Automatisierungseinheiten lauffähig ist.

3. Automatisierungs-, Überwachungs- und Messwerterfassungssystem bei technischen Prozessen nach einem der Ansprüche 1 oder 2,
**dadurch gekennzeichnet, dass** den Automatisierungseinheiten (18, 19, 20) eine Informationsschicht (22) übergeordnet ist, die Informationsprogramme (23, 24, 25, 26, 27) enthält, wobei die Informationsprogramme lesenden Zugriff auf die Automatisierungseinheiten (18, 19, 20) und die Automatisierungsmodule (44, 45, 46) haben.

4. Automatisierungs-, Überwachungs- und Messwerterfassungssystem bei technischen Prozessen nach einem der vorhergehenden Ansprüche,
**dadurch gekennzeichnet, dass** die Informationsprogramme (23, 24, 25, 26, 27) der Informationsschicht (22) so konfigurierbar sind, dass sie keinen Zugriff auf bestimmte Automatisierungsgruppen haben.

5. Automatisierungs-, Überwachungs- und Messwerterfassungssystem bei technischen Prozessen nach einem der vorhergehenden Ansprüche,
**dadurch gekennzeichnet, dass** die einzelnen Automatisierungseinheiten (18, 19, 20) in einer Automatisierungsgruppe (99) zusammengefasst und so gestaltet sind, dass sie über einen eigenen von den anderen Automatisierungseinheiten gekapselten Programmcode verfügen und unabhängig voneinander lauffähig sind.

6. Automatisierungs-, Überwachungs- und Messwerterfassungssystem bei technischen Prozessen nach einem der vorhergehenden Ansprüche,
**dadurch gekennzeichnet, dass** die Automatisierungseinheiten (31, 32) in einer Übersichtsebene (33, 36), einer Ebene der Automatisierungsmodule (34, 37) und einer Reportebene (35, 38) strukturiert sind.

7. Automatisierungs-, Überwachungs- und Messwerterfassungssystem bei technischen Prozessen nach einem der vorhergehenden Ansprüche,
**dadurch gekennzeichnet, dass** die Übersichtsebene (33, 36) zum Anlegen von Automatisierungseinheiten (18, 19, 20, 31, 32) und Automatisierungsmodulen (44, 45, 46) und dem Start und Stopp der Automatisierungsmodule ausgelegt ist, sowie Informationen über den Status der einzelnen Automatisierungsmodule anzeigt.

8. Automatisierungs-, Überwachungs- und Messwerterfassungssystem bei technischen Prozessen nach einem der vorhergehenden Ansprüche,
**dadurch gekennzeichnet, dass** in der Ebene der Automatisierungsmodule (34, 37) eine Vielzahl von Automatisierungsmodule (44, 45, 46) angeordnet sein können, die dort entwickelt wurden, unabhängig von einander ausführbar sind und jeweils über einen eigenen Programmcode verfügen.

9. Automatisierungs-, Überwachungs- und Messwerterfassungssystem bei technischen Prozessen nach einem der vorhergehenden Ansprüche,
**dadurch gekennzeichnet, dass** in der Reportebene (35, 38, 43) eine Vielzahl von Reports (47, 48, 49) entwickelt werden können, die unabhängig voneinander ausführbar sind, wobei jeder Report über einen eigenen Programmcode verfügt.

10. Automatisierungs-, Überwachungs- und Messwerterfassungssystem bei technischen Prozessen nach einem der vorhergehenden Ansprüche,
**dadurch gekennzeichnet, dass** einem Automatisierungsmodul (44) ein Report (47) zugeordnet ist und dass der Automatisierungsmodul mit dem Report datenverbunden ist, wobei die Daten in dem Formular des Reports ausgebbar sind.

11. Automatisierungs-, Überwachungs- und Messwerterfassungssystem bei technischen Prozessen nach einem der vorhergehenden Ansprüche,
**dadurch gekennzeichnet, dass** eine Übersichtsebene (41, 55) mit einem Übersichtsprogramm (40, 54) vorgesehen ist, das einen Entwicklungsmodus (66) und einen Laufzeitmodus (67) aufweist, dass jedem Automatisierungsmodul (44, 45, 46) der Ebene der Automatisierungsmodule (42) ein Entwicklungsmodus (68) und ein Laufzeitmodus (69) zugeordnet ist und dass jeder Report (47, 48, 49) der Reportebene (43, 57, 65) über einen Entwicklungsmodus (70) und einen Laufzeitmodus (71) verfügt.

12. Automatisierungs-, Überwachungs-und Messwerterfassungssystem bei technischen Prozessen nach einem der vorhergehenden Ansprüche,
**dadurch gekennzeichnet, dass** die Automatisierungsmodule (44, 45, 46, 58, 59, 81) in drei Ebenen (84, 85, 86) strukturiert sind, mit einer modularen Bedien- und Beobachtungs-Ebene (84), die Schaubilder (87, 88) mit Prozessvisualisierungsobjekten enthält, einer Prozedurebene (85) mit den Prozedur-Bildschirmen (89, 90), die graphische Symbole als Synonyme für Programmmodule (91) enthalten, und einer Scriptebene (86), in der der Programmcode (91) enthalten ist.

13. Automatisierungs-, Überwachungs- und Messwerterfassungssystem bei technischen Prozessen nach einem der vorhergehenden Ansprüche,
**dadurch gekennzeichnet, dass** eine Kanaltabelle (53) vorgesehen ist, mit deren Feldern die Mess- und Steuereinheiten (2, 14, 15, 16) und die Automatisierungsmodule der Automatisierungseinheiten (18, 19, 20) lesend und schreibend verbindbar sind.

14. Automatisierungs-, Überwachungs- und Messwerterfassungssystem bei technischen Prozessen nach einem der vorhergehenden Ansprüche,
**dadurch gekennzeichnet, dass** eine Formulartabelle (93) vorgesehen ist, die durch den Entwicklungsmodus des Reports (97) strukturierbar ist und mit dem Programm des Automatisierungsmoduls (92) im Laufzeitmodus Daten schreibend in Wirkverbindung steht, wobei die Daten im Laufzeitmodus des Reports (98) in einem Formular ausgebbar sind.

15. Automatisierungs-, Überwachungs-und Messwerterfassungssystem bei technischen Prozessen nach einer der vorhergehenden Ansprüche,
**dadurch gekennzeichnet, dass** Automatisierungseinheiten (18, 19, 20), Automatisierungsmodule (44, 45, 46), Reports (47, 48, 49), Visualisierungsobjekte der Bildschirme (87, 88) und Softwaremodule (91) individuell mit Namen belegbar sind.

16. Automatisierungs-, Überwachungs-und Messwerterfassungssystem bei technischen Prozessen nach einem der vorhergehenden Ansprüche,
**dadurch gekennzeichnet, dass** die einzelnen Automatisierungseinheiten (81) einen Prozedurbildschirm (90) im Laufzeitmodus (83) enthalten, der miteinander verbundene symbolische Figuren aufweist, die Erkennungsmerkmale von Prozedurmodulen darstellen, und dass diejenigen symbolischen Figuren hervorgehoben sind, die im Laufzeitmodus gerade in Funktion sind.

17. Automatisierungs-, Überwachungs- und Messwerterfassungssystem bei technischen Prozessen nach einem der vorhergehenden Ansprüche,
**dadurch gekennzeichnet, dass** analogen Prozessgrößen wie z.B. Temperaturen, Drücke, Durchflüsse, die mittels Sensoren durch die Mess-und Steuereinheit erfasst werden, ein Zeitstempel hinzugefügt werden kann.

18. Automatisierungs-, Überwachungs-und Messwerterfassungssystem bei technischen Prozessen nach einem der vorhergehenden Ansprüche,
**dadurch gekennzeichnet, dass** den Flanken digitaler Signale ein Zeitstempel hinzugefügt werden kann.
